# EUROPEAN PATENT APPLICATION

(11) **EP 3 561 732 A1**
(43) Date of publication of application: **30.10.2019**
(21) Application number: 17883465.1
(22) Date of filing: 22.12.2017
(51) Int. Cl.: G06N 3/04

(54) **OPERATION APPARATUS AND METHOD FOR ARTIFICIAL NEURAL NETWORK**

(30) Priority: 23.12.2016 CN 201611214028
(71) Applicant: Cambricon Technologies Corporation Limited, Beijing 100190 (CN); Shanghai Cambricon Information Technology Co., Ltd, Beijing 100191 (CN)
(72) Inventor: LIU, Shaoli, Shanghai 201203 (CN); HAO, Yifan, Shanghai 201203 (CN); CHEN, Yunji, Shanghai 201203 (CN); GUO, Qi, Shanghai 201203 (CN); CHEN, Tianshi, Shanghai 201203 (CN)
(74) Representative: AWA Sweden AB
(86) International application number: PCT/CN2017/118124
(87) International publication number: WO 2018/113790

(57) **Abstract**

A device and a method for artificial neural network operation, wherein the device for artificial neural network operation includes a mapping unit for receiving input neurons and weights, generating connection relationship data between the input neurons and output neurons, and outputting mapped input neurons and mapped weights, with correspondences of the mapped input neurons and the mapped weights being an input neuron-weight pairs; the mapping unit includes: a first mapping unit for removing weights with absolute values less than or equal to a first threshold or with values of 0 or less than the first threshold; and/or a second mapping unit for removing an input neurons with absolute values less than or equal to a second threshold or with values of 0 or less than the second threshold.

## Description

### TECHNICAL FIELD

The present disclosure relates to the technical field of data processing, and more particularly to a device and a method for an artificial neural network operation.

### BACKGROUND

Artificial Neural Networks (ANNs), simply referred to as Neural Networks (NNs), is an algorithmic mathematical model that imitates the behavioral characteristics of animal neural network and applies distributed parallel information processing. Such network relies on the complexity of the system, and enables information processing by adjusting the interconnecting relationships among a large number of internal nodes. The algorithm used by the neural networks is vector multiplication, with a wide use of symbolic functions and various approximations thereof.

Neural network has been widely used in a variety of application scenarios: computational vision, speech recognition, natural language processing, etc. In recent years, the scale of neural network keeps growing. In 1998, the scale of Lecun's neural network for handwritten character recognition was less than 1M weights; while in 2012, the scale of Krizhevsky's neural network used in the ImageNet competition was 60M weights.

The neural network is an application with large amount of calculations and memory accessing. More weights result in larger amount of calculations and memory accessing. With the dramatic increase in the amount of calculations and memory accessing in the neural network, the prior art generally uses a general-purpose processor for the calculations in an artificial neural network. For general-purpose processors, input neurons, output neurons and weights are stored in three arrays separately, along with an index array that stores the connection relationship data for each output and input connection. In the calculations, the main operation is the multiplication of neurons with weights. Since the weights and the neurons do not have one-to-one correspondence, in each operation the weight corresponding to the neuron needs to be found by the index array. Due to the limited capability on calculating and memory accessing of the general-purpose processors, the requirements of neural networks cannot be met. When multiple general-purpose processors are executed in parallel, communication between general-purpose processors becomes a performance bottleneck. In the calculations of a neural network after trimming, in each multiplication, the position corresponding to the weight need to be looked up again in the index array, increasing an extra amount of calculation and the cost of memory accessing. Therefore, calculations of the neural network take a long time and consume a lot of power. The general-purpose processor needs to decode the multi-layer artificial neural network operation into a long sequence of operations and a memory accessing instructions, and the front-end decoding for the processor brings a large power consumption.

Another known method supporting artificial neural network operations and their training algorithms is to use a graphics processing unit (GPU), which supports the above algorithms by executing general SIMD instructions using a general purpose register file and a general-purpose stream processing unit. However, since the GPU is a device specially used for performing graphic image operations and scientific calculations, without specific support for artificial neural network operations, a large amount of front-end decoding is still required to perform artificial neural network operations, which brings a lot of additional costs. In addition, the GPU has only a small on-chip buffer. Model data (weight) for the multi-layer artificial neural network needs to be repeatedly transferred from outside of the chip. The off-chip bandwidth becomes the main performance bottleneck, and results in huge power consumption.

### SUMMARY

In view of the problems existing in the prior art, in order to overcome the deficiencies of the above prior art solutions, the present disclosure proposes a device and a method for artificial neural network operation.

According to an aspect of the present disclosure, there is provided a device for artificial neural network operation, comprising a mapping unit for receiving input neurons and weights, generating connection relationship data between the input neurons and output neurons, and outputting mapped input neurons and mapped weights, with correspondences of the mapped input neurons and the mapped weights being an input neuron-weight pairs. The mapping unit includes: a first mapping unit for removing weights with absolute values less than or equal to a first threshold or with values of 0 or less than the first threshold; and/or a second mapping unit for removing an input neurons with absolute values less than or equal to a second threshold or with values of 0 or less than the second threshold.

In some embodiments, the first mapping unit includes: a first mapping determination unit for determining if the absolute value of each input weight is less than or equal to the first threshold or if the value of each input weight is 0 or less than the first threshold; and a first mapping execution unit for generating the connection relationship data based on determination results by the first mapping determination unit, removing the weights with absolute values less than or equal to the first threshold or with values of 0 or less than the first threshold, and outputting the input neuron-weight pairs. And/or the second mapping unit includes: a second mapping determination unit for determining if the absolute value of each input neuron is less than or equal to the second threshold or if the value of each input neuron is 0 or less than the second threshold; and a second mapping execution unit for generating the connection relationship data based on determination results by the second mapping determination unit, removing the input neurons with absolute values less than or equal to the second threshold or with values of 0 or less than the second threshold, and outputting the input neuron-weight pairs.

In some embodiments, an input layer of the neural network has N input neurons *I₁, I₂,* ..., *I_{N},* an output layer has M output neurons *O₁, O₂,* ..., *O_{M},* and generating the connection relationship data by the first mapping execution unit of the first mapping unit includes obtaining corresponding connection relationship data for the *j*th output neuron *Oj*, wherein for N nodes in the input layer, the connection relationship data has N bits, all the values of the N bits are set to 1 at the beginning, with all the N input neurons *I₁, I₂,* ..., *IN* having connections with the output neuron *Oⱼ*; if the absolute value of the weight between the *i*th input neuron *Iᵢ* and the output neuron *Oⱼ* is less than or equal to the first threshold, or if the value of the weight between the *i*th input neuron *Iᵢ* and the output neuron *Oⱼ* is 0 or less than the first threshold, the value of the *i*th bit in the connection relationship data is set to 0, i.e., there is no connection between *Iᵢ* and *Oⱼ*; the connection relationship data for all the output neurons *O₁, O*₂*,* ..., *O_{M}* are merged into one vector, with the (N×(*j*-1)+1)th to the (*N*×*J*)th components of the vector being the connection relationship data corresponding to the output neurons *Oⱼ*.

In some embodiments, the input layer of the neural network has N input neurons *I₁, I₂,* ..., *I_{N},* the output layer has M output neurons *O₁, O₂,* ..., *O_{M},* and generating the connection relationship data by the first mapping execution unit of the first mapping unit includes obtaining corresponding connection relationship data for the *j*th output neuron *Oⱼ*; if the absolute value of the weight between the *i*th input neuron *Iᵢ* and the output neuron *Oⱼ* is less than or equal to the first threshold, or if the value of the weight between the *i*th input neuron *Iᵢ* and the output neuron *Oⱼ* is 0 or less than the first threshold, there is no connection between *Iᵢ* and *Oⱼ*; or otherwise there is a connection; and n input neurons having connections with *Oⱼ* are *I_{i_1}, I_{i_2},* ..., *Ii_{_n},* wherein 1 ≤ i_1<i_2<...<i_n ≤ *N.* The connection relationship data corresponding to the output neuron *Oⱼ* has n bits, wherein the value of the first bit of the connection relationship data is equal to *i*_1-1, and the value of the *k*th bit of the connection relationship data is equal to *i_k-i_*(*k*-1), where *n*≥*k*>1.

In some embodiments, the input layer of the neural network has N input neurons *I₁, I₂,* ..., *I_{N},* the output layer has M output neurons *O₁, O₂,* ..., *O_{M},* and generating the connection relationship data by the second mapping execution unit of the second mapping unit includes obtaining corresponding connection relationship data for the *j*th output neuron *Oⱼ*, wherein for the N nodes in the input layer, the connection relationship data has N bits, all the values of the N bits are set to 1 at the beginning, with all the N input neurons *I₁, I₂,* ..., *I_{N}* having connections with the output neuron *Oⱼ*; if the absolute value of the *i*th input neuron *Iᵢ* is less than or equal to the second threshold, or if the value of the *i*th input neuron *Iᵢ* is 0 or less than the second threshold, the value of the *i*th bit in the connection relationship data is set to 0, i.e., there is no connection between *Iᵢ* and *Oⱼ*; the connection relationship data for all the output neurons *O₁, O*₂*,* ..., *O_{M}* are merged into one vector, with the (N×(*j*-1)+1)th to the (*N×J*)th components of the vector being the connection relationship data corresponding to the output neurons *Oⱼ*.

In some embodiments, the input layer of the neural network has N input neurons *I₁, I₂,* ..., *I_{N},* the output layer has M output neurons *O₁, O*₂*,* ..., *O_{M},* and generating the connection relationship data by the second mapping execution unit of the second mapping unit includes obtaining corresponding connection relationship data for the *j*th output neuron *Oⱼ*; if the absolute value of the *i*th input neuron *Iᵢ* is less than or equal to the second threshold, or if the value of the *i*th input neuron *Iᵢ* is 0 or less than the second threshold, there is no connection between *Iᵢ* and *Oⱼ*; or otherwise there is a connection; and n input neurons having connections with *Oⱼ* are *I_{i_1}, I_{i_2},* ..., *Ii_{_n},* wherein 1 ≤ i_1 <i_2<... < i_n ≤ *N.* The connection relationship data corresponding to the output neuron *Oⱼ* has n bits, wherein the value of the first bit of the connection relationship data is equal to i_1-1, and the value of the *k*th bit of the connection relationship data is equal to *i_k-i_*(*k*-1), where *n*≥*k*>1.

In some embodiments, the device for artificial neural network operation further includes a storage unit for storing data and instructions input from the outside, wherein the data includes input neurons and weights, which are invoked by the mapping unit, and the mapped input neurons and the mapped weights are then output by the mapping unit; and an operation unit for invoking the mapped input neurons and the mapped weights and perform operations to obtain the output neurons.

In some embodiments, the operation device includes a multiplication unit, at least one adder, and/or a non-linear transforming unit.

In some embodiments, the device for artificial neural network operation further includes: an instruction buffer unit for buffering instructions; an input neuron buffer for buffering the mapped input neurons; a weight buffer for buffering the mapped weights; a control unit for reading instructions in the instruction buffer unit and controlling the operation unit to invoke the mapped input neurons in the input neuron buffer and the mapped weights in the weight buffer and perform operations; and an output neuron buffer for buffering the output neurons obtained by the operation unit.

In some embodiments, mapped input neurons and the mapped weights output by the mapping unit are stored on the storage unit, and the device further includes a DMA for invoking instructions, the mapped input neurons and the mapped weights on the storage unit to store them in the instruction buffer unit, the input neuron buffer, and the weight buffer respectively, and storing the output neurons in the output neuron buffer on the storage unit, so as to be transmitted to the outside.

In some embodiments, the device for artificial neural network operation further includes a DMA configured to invoke instructions on the storage unit to store the instructions on the instruction buffer unit, invoke data on the storage unit to store the data on the mapping unit, store the mapped input neurons and the mapped weights output by the mapping unit respectively into the input neuron buffer and the weight buffer, and store the output neurons in the output neuron buffer on the storage unit, so as to be transmitted to the outside.

According to another aspect of the present disclosure, there is provided a method for artificial neural network operation by using an artificial neural network operation device; the method comprises: invoking input neurons and weights in a storage unit and outputting mapped input neurons and mapped weights by a mapping unit; and invoking the mapped input neurons and the mapped weights and performing an operation by an operation device, to obtain output neurons.

In some embodiments, the operations include a multiplication, an addition, and/or a nonlinear transformation.

In some embodiments, the method further includes invoking, by the mapping unit, all the input neurons and the weights in the storage unit, outputting the mapped input neurons and the mapped weights and storing the mapped input neurons and weights into the storage unit; reading a part of the mapped input neurons and the mapped weights by the input neuron buffer and the weight buffer via the DMA, to have the read mapped input neurons and weights invoked by the operation unit; buffering, by the output neuron buffer, the output neurons obtained from the operation unit and storing the obtained output neurons into the storage unit via the DMA; and determining whether all the input neurons and the weights have been operated, if so, the operation is finished; or otherwise, returning to the step of reading a part of the mapped input neurons and the mapped weights by the input neuron buffer and the weight buffer via the DMA.

In some embodiments, the method further includes: invoking, by the mapping unit, a part of the input neurons and the weights in the storage unit via the DMA and outputting the mapped input neurons and the mapped weights; buffering the mapped input neurons and the mapped weights by the input neuron buffer and the weight buffer, to have the mapped input neurons and the mapped weights invoked by the operation unit; buffering, by the output neuron buffer, the output neurons obtained from the operation unit and storing the output neurons into the storage unit via the DMA; and determining whether all the input neurons and the weights have been mapped and operated, if so, the operation is finished; or otherwise, returning to the step of invoking a part of the input neurons and the weights in the storage unit via the DMA by the mapping unit.

According to still another aspect of the present disclosure, there is provided a chip comprising the device for artificial neural network operation.

According to still another aspect of the present disclosure, there is provided an electronic device comprising the chip.

As can be seen from the above technical solutions, the present disclosure has the following beneficial effects:
1) by generating a connection relationship data of the input neurons and the weights with the first mapping unit and/or the second mapping unit, the amount of calculation amount can be reduced, solving the problems that the CPU and the GPU have insufficient operational performance and that the cost on front-end decoding is large, effectively improving the support for multi-layer artificial neural network operation algorithms;
2) by using a dedicated on-chip buffer for multi-layer artificial neural network operation algorithms, the reusability of input neurons and weight data can be fully exploited, thereby avoiding repeated writing and reading of data to/from the memory, reducing bandwidth for memory accessing and avoiding the memory bandwidth from becoming performance bottleneck of a multi-layer artificial neural network operation and its training algorithm.

### BRIEF DESCRIPTION OF THE DRAWINGS

FIG. 1 shows a structural diagram of a mapping unit according to an embodiment of the present disclosure;
FIG. 2 shows a structural diagram of an artificial neural network according to an embodiment of the present disclosure;
FIG. 3 shows a diagram of a first connection for the first output neuron after the first mapping in the artificial neural network in FIG. 2;
FIG. 4 shows a diagram of a second connection for the first output neuron after the first mapping in the artificial neural network in FIG. 2;
FIG. 5 shows a structural diagram of a device for artificial neural network operation according to an embodiment of the present disclosure;
FIG. 6 shows a flow chart of an operation method of the device for artificial neural network operation in FIG. 5;
FIG. 7 shows a flow chart showing the operation steps by the operation unit in FIG. 6;
FIG. 8 shows a structural diagram of a device for artificial neural network operation according to another embodiment of the present disclosure;
FIG. 9 shows a flow chart of an operation method of the device for artificial neural network operation in FIG. 8;
FIG. 10 shows a structural diagram of a system for artificial neural network operation according to still another embodiment of the present disclosure.

### DETAILED DESCRIPTION

Some embodiments of the present disclosure will be described more comprehensively hereinafter with reference to the appended drawings, in which some but not all the embodiments are shown. In fact, the embodiments of the present disclosure may be embodied in many different forms and should not be construed as being limited to the embodiments set forth herein; relatively, these embodiments are provided so that the present disclosure meets applicable legal requirements.

In the present specification, the following various embodiments for describing the principles of the present disclosure are merely illustrative and should not be construed as limiting the scope of the invention. The following description with reference to the drawings is intended to help understanding the illustrative embodiments of the present disclosure defined by the claims and the equivalence comprehensively. The description below includes numerous specific details to assist the understanding, but these details are considered to be merely exemplary. Accordingly, it will be appreciated by those skilled in the art that various changes and modifications may be made to the embodiments described herein without departing from the scope and spirit of the invention. In addition, descriptions of well-known functions and constructions are omitted for clarity and conciseness. Further, the same reference numerals are used throughout the drawings for the similar functions and operations.

The present disclosure will be further described in detail below with the specific embodiments of the disclosure by taking reference to the accompanying drawings.

The embodiments of the present disclosure provide a device for artificial neural network operation, which comprises a mapping unit configured to generate connection relationship data and output mapped input neurons and the mapped weights, with correspondence between the mapped input neurons and the mapped weights being an input neuron-weight pair, reducing the amount of computations in the artificial neural network operation and realizing an artificial neural network operation with fast computations.

The input neuron-weight pair is not a true data storage structure, but merely represents a correspondence between the input neurons and the weights. For example, the input neurons are stored in a vector A, and the weights are stored in a vector B, wherein the vectors A and B have the same length, and the components of the same position in the vectors A and B are combined so to be considered as an input neuron-weight pair. When participating in operations, the input neurons and the weights can be placed separately in different buffers and used by the operation unit.

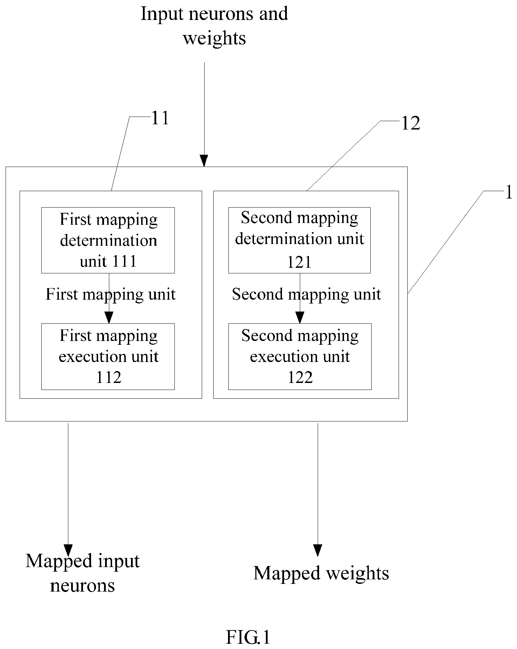

FIG. 1 is a structural diagram of a mapping unit according to an embodiment of the present disclosure. As shown in FIG. 1, input data includes input neurons and weights; the input data is input to a mapping unit 1, and the mapping unit 1 outputs mapped input neurons and mapped weights. The correspondence between the mapped input neurons and the mapped weights is referred to as an input neuron-weight pair.

The mapping unit comprises a first mapping unit 11 and/or a second mapping unit 12, the first mapping unit 11 is configured to perform a first mapping operation, which can be used to remove weights having values of 0 or less than a first threshold α'; optionally, the first threshold α' satisfies that 0<α'<0.2, for example, α' may be 0.1, 0.08, 0.05, 0.02, 0.01. The first mapping unit may also be used to remove weights with absolute values less than or equal to a first threshold α; optionally, the first threshold α satisfies that 0≤α<0.2, for example, α may be 0, 0.1, 0.08, 0.05, 0.02, 0.01. The second mapping unit 12 is configured to perform a second mapping operation, and correspondingly, which may be used to remove input neurons having values of 0 or less than a second threshold β', optionally, the second threshold β' satisfies that 0<β'<0.2; for example, β' may be 0.1, 0.08, 0.05, 0.02, 0.01. The second mapping unit may also be used to remove input neurons with absolute values less than or equal to a second threshold, optionally, the second threshold β satisfies that 0≤β<0.2, for example, β may be 0, 0.1, 0.08, 0.05, 0.02, 0.01. The two thresholds α and β mentioned here may or may not be equal. The following description will only be explained by the first mapping operation removing weights with absolute values less than or equal to the first threshold value α, and by the second mapping operation removing input neurons with absolute values less than or equal to the second threshold value β.

The first mapping unit 11 includes a first mapping determination unit 111 which is configured to determine if the absolute value of each input weight is less than or equal to the first threshold α; and a first mapping execution unit 112 which is configured to generate connection relationship data based on the results from the first mapping determination unit and convert the input data into an input neuron-weight pair according to the generated connection relationship data.

The connection relationship data generated by the first mapping execution unit 112 of the first mapping unit 11 can be expressed in the following two manners:
The first manner:
   1 is used to represent that the absolute value of the weight between the input neuron and the output neuron is greater than the first threshold α, with the connection between the input neuron and the output neuron remained. 0 is used to represent that the absolute value of the weight is less than or equal to the first threshold α, with the connection between the input neuron and the output neuron removed. The connections of each output neuron with all the input neurons form a character string of 0s and 1s to represent the connection relationship data of the output neuron. The connection relationship data of all output neurons is merged into a vector.
The second manner:
   remaining/removing a connection according to whether the absolute value of the weight is greater than the first threshold α; if so, the connection is remained; or otherwise it is removed. The connection relationship data of an output neuron is represented by a distance from the position of the first connection of the output neuron to its first input neuron, a distance from the second input neuron of the output neuron to its last input neuron, a distance from the third input neuron of the output neuron to its last input neuron, ..., and so on, until all the input neurons for that output neuron have been enumerated.

The second mapping unit 12 includes a second mapping determination unit 121 which is configured to determine if the absolute value of each input neuron is less than or equal to the second threshold β and a second mapping execution unit 122 which is configured to generate connection relationship data based on the result from the second mapping determination unit and convert the input data into an input neuron-weight pair according to the generated connection relationship data.

The connection relationship data generated by the first mapping execution unit 122 in the second mapping unit 12 can also be expressed in the following two manners:
The first manner:
   1 is used to represent that the absolute value of the input neuron is greater than the second threshold β. 0 is used to represent that the absolute value of the input neuron is less than or equal to the second threshold β, with the connection between the input neuron and the output neuron removed. The connections of each output neuron with all the input neurons form a character string of Os and 1s to represent the connection relationship data of the output neuron. The connection relationship data of all output neurons is merged into a vector.
The second manner:
   remaining/removing a connection according to whether the absolute value of the input neuron is greater than the first second β; if so, the connection is remained; or otherwise it is removed. The connection relationship data of an output neuron is represented by a distance from the position of the first connection of the output neuron to its first input neuron, a distance from the second input neuron of the output neuron to its last input neuron, a distance from the third input neuron of the output neuron to its last input neuron, ..., and so on, until all the input neurons for that output neuron have been enumerated.

Specifically, a neural network have L layers; for the Kth layer and the (*K*+1)th layer, with *K*= 1, 2, *...L*-1, the Kth layer is referred to as the input layer and the (*K*+1)th layer is referred to as the output layer. That is, except for the top layer, each layer can be used as an input layer, and the next layer is a corresponding output layer, and the number of neurons in each layer is known.

Assuming that both the first mapping unit and the second mapping unit perform their respective operations, the operation process between each pair of input layer and output layer is:
the input layer consist of *N* input neurons *I*₁*, I*₂*,* ..., *I_{N}* and the output layer consist of *M* output neurons O₁, O₂, ..., O*_{M}.*
*i*=1*,* 2, ..., *N, j*=1*,* 2, ..., *M*

In the first connection manner:
First, obtaining the corresponding connection relationship data for each output neuron *Oⱼ*. Since the input layer has *N* nodes, the connection relationship data has *N* bits, each bit having a value of 1 or 0; a value of 1 for the *i*th bit indicates that there is a connection between *Iᵢ* and *Oⱼ*, while a value of 0 indicates that there is no connection between *Iᵢ* and *Oⱼ*. All the values of N bits are set to 1 initially. If the absolute value of the input neuron *Iᵢ* is less than or equal to the second threshold β, or if the absolute value of the weight between *Iᵢ* and *Oⱼ* is less than or equal to the first threshold α, the value of the *i*th bit in the connection relationship data is set to 0, i.e. it is determined that there is no connection between *Iᵢ* and *Oⱼ*. Then the connection relationship data of all output neurons is merged into a vector, and values of the (*N*×(*j*-1)+1)th to the (*N*× *j*)th components in the vector is the connection relationship data corresponding to the output neuron *Oⱼ*.

In the method, the number of neurons in the input layer is equal to the number of the stored bits in the connection relationship data corresponding to each output neuron. Therefore, even with the simplest one-dimensional array with values of 0 and 1, the connection relationship data corresponding to each output neuron can be clearly known.

In the second connection manner:
obtaining the corresponding connection relationship data for each output neuron *Oⱼ*. If the absolute value of the input neuron *Iᵢ* is less than or equal to the second threshold β, or if the absolute value of the weight between *Iᵢ* and *Oⱼ* is less than or equal to the first threshold α, it is determined that there is no connection between *Iᵢ* and *Oⱼ*; or otherwise the connection exists. if the input neurons having connections with *Oⱼ* are *I*_{*i*_1}*, I*_{*i_*2}*,* ..., I_{*i*_n}, where 1≤*i_*1<*i*_2<...< *i*_n≤N, there are N bits in the connection relationship data, with the value of the first bit equal to *i*_1-1; n≥k>1, and the value of the *k*th bit in the connection relationship data equal to *i_k-i_*(*k*-1).

In this manner, the connection relationship data can be represented by a high-dimensional dynamic array, a linked list or the like.

After the connection relationship data is generated, the mapping execution unit of the mapping unit outputs the mapped input neurons and the mapped weights according to the connection relationship data, with the correspondence between mapped input neurons and the mapped weights being input neuron-weight pairs; and the input neurons and the mapped weights can be used directly during the operation.

In summary, in the above-mentioned mapping units, the first mapping execution unit 112 of the first mapping unit 11 and the second mapping execution unit 122 of the second mapping unit 12 generate the connection relationship data based on the input data and output the mapped input neurons and the mapped weights; the corresponding connection relationship data can be represented in two manners: one indicating whether there is a connection between each input and output neuron by one bit; and the other one indicating the location of each connection by the distances between the connections.

In order to make the functions of the two mapping units more explicit, the data operation processes in the two units are given below respectively.

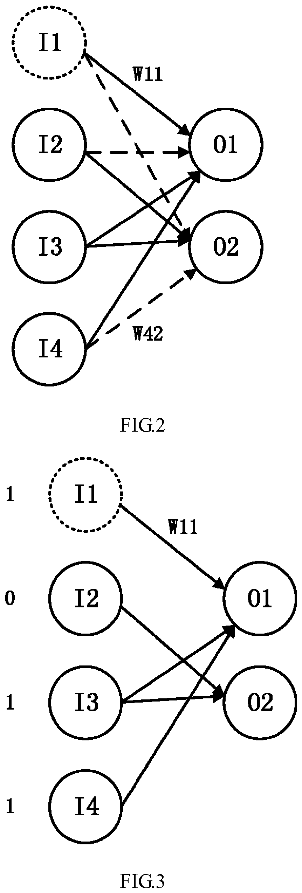

Taking an artificial neural network as shown in FIG. 2 as an example, explanation is made only with a criterion that whether the value is 0. The artificial neural network has 4 input neurons: I1*,* I2, I3, I4; 2 output neurons: O1, O2; and the connected weights are denoted as W11, W21, W31, W41, W12, W22, W32 and W42. The value of I1 is zero, the values of 12,13 and 14 are non-zero; the values of W21, W12, and W42 are zero; and the remaining weights are non-zero.

The first mapping unit and the second mapping unit may process the data simultaneously or process the data sequentially with the order of the two mapping units interchangeable. The following description is made with the first mapping unit processing the data first.

The first connection manner is expressed as follows:
In the first mapping unit 11, if determination on the weight is performed, the connection relationship data of both 01 and O2 is 1111 as a default, and the order is 11111111; if the determination on the weight is performed, as shown in FIG. 3, the connection relationship data of the output neuron O1 is 1011, with each bit indicating whether there is a connection with the input neuron, 1 indicating that there is a connection and 0 indicating that there is no connection; the connection relationship data of the output neuron O2 is 0110. During the operation, the input neurons and the weights corresponding to the connection relationship data of 0 will not be operated. When being stored, the connection relationship data can be stored in an order of the output neurons. A vector can be formed by placing all the inputs of each output neuron sequentially, and the placement order in the above example is 10110110.

In the second mapping unit 12, if no determination on the value of the input neuron value is performed, the connection relationship data and the placement order of 01, O2 will not be changed; if a determination on the values of the input neuron is performed, for the neural network after a first mapping operation as shown in FIG. 3, the connection relationship data of the output neuron O1 is 0011, with the first bit changed from 1 to 0, because the first input neuron I1 has a value of 0, and the connection from I1 is removed; the connection relationship data of the output neuron O2 is 0110; and final placement is 00110110. For the neural network that has not been performed with the first mapping operation, the connection relationship data of the output neuron O1 is 0111, the connection relationship data of the output neuron O2 is 0111, and the final placement is 01110111.

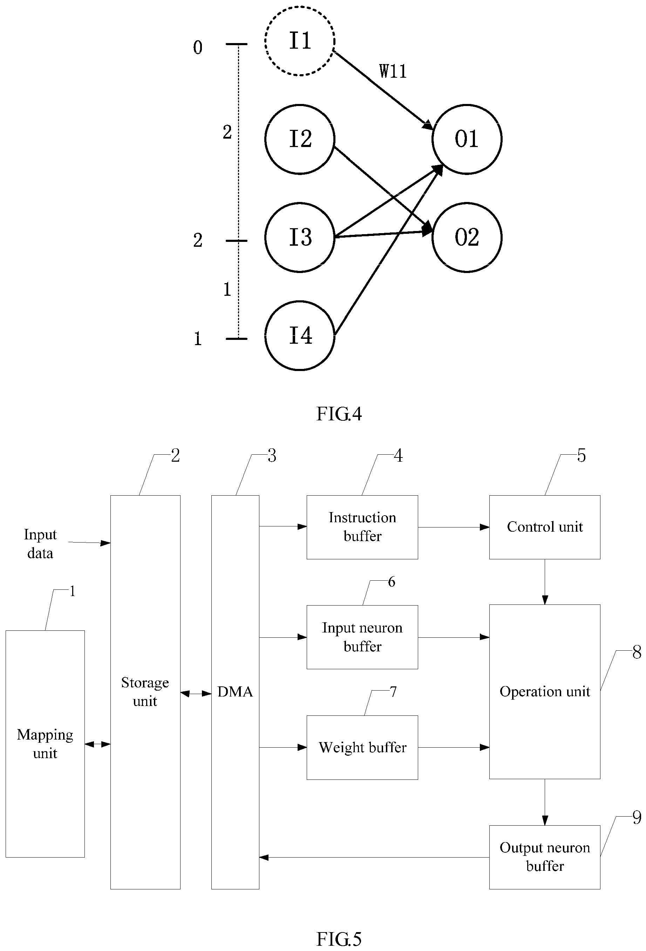

The second connection manner is expressed as follows:
In the first mapping unit 11, if no determination on the weight is not performed, the connection relationship data of both O1 and O2 is 0, 1, 1, 1 as default; if the determination on the weight is performed, as shown in FIG. 4, the output neuron O1 is connected to the input neurons I1, I3, and I4, and the connection relationship data is 0, 2, 1. 0 indicates that the distance from the position of the first connection to the first input neuron is 0; that is, the first input neuron is connected; 2 indicates that the distance from the second input neuron to the last input neuron is 2, which represents that the third input neuron is connected, and 1 indicates that the distance from the third input neuron to its last input neuron is 1, which represents that the fourth input neuron is connected. Similarly, the connection relationship data of O2 is 1,1.

In the second mapping unit 12, if no determination on the value of the input neuron is performed, the connection relationship data of O1, O2 will not be changed; if the determination on the value of the input neuron is performed, for the neural network after the first mapping operation as shown in FIG. 4, because the first input neuron I1 has a value of 0, the connection from I1 is removed, the connection relationship data of the output neuron O1 is 2, 1; and the connection relationship data of the output neuron O2 is 1, 1. For the neural network that has not been performed with the first mapping operation, the connection relationship data of both of the output neurons O1, O2 is 1,1,1.

The first mapping unit 11 and the second mapping unit 12 output the mapped input neurons and weights according to the connection relationship data obtained as above; the correspondence between the mapped input neurons and the mapped weights is input neuron-weight pairs, which can be used directly in the operations. Taking the specific process of outputting the mapping about the neuron O1 in an artificial neural network as shown in FIG. 2 as an example:
the input neurons are 11,12,13,14 and the input weights are W11, W21, W31, W41, where I1 and W21 are zero, and the rest are non-zero.

First, in the first mapping unit 11, the connection relationship data is 1011, or 0, 2, 1; then, in the second mapping unit 12, the connection relationship data is 0011, or 2, 1. The mapping execution units of the two mapping units output, according to the connection relationship data, input neurons with non-zero values and weights connected therefrom. That is, the mapped input neurons are 13,14, the mapped weights are W31, W411; and the input neuron-weight pairs are I3-W31, I4-W41. For example, the mapped input neurons and the mapped weights are stored in the form of a vector, obtaining an input neuron vector (13, 14) and a weight vector (W31, W41).

Although the above example is implemented with the first mapping operation performed by the first mapping unit, and then the second mapping performed by the second mapping unit, so as to obtain the mapped input neurons and the mapped weights eventually, in practical applications, the two mapping units preferably operate on the data simultaneously, rather than sequentially.

The device for artificial neural network operation in the embodiments of the present disclosure includes, in addition to the mapping unit 1, a storage unit 2, a DMA (direct memory access) 3, an instruction buffer 4, a control unit 5, an input neuron buffer 6, and a weight buffer 7, an operation unit 8 and an output neuron buffer 9. As shown in Figure 5:
The storage unit 2 is configured to store data and instructions; it receives and stores data and instructions input from the outside, wherein the data include input neurons and weights.

The mapping unit 1 invokes the input neurons and the weights in the storage unit 2, and performs a first mapping operation by the first mapping unit 11, and performs a second mapping by the second mapping unit 12. By applying mapping on the data, the mapping unit 1 obtains the mapped input neurons and the mapped weights and stores the same in the storage unit 2.

The DMA 3 invokes the instructions in the storage unit 2 and mapped input neurons and the mapped weights, and allocates them to the instruction buffer 4, the input neuron buffer 6 and the weight buffer 7 respectively.

The control unit 5 reads dedicated instructions from the instruction buffer 4, decodes them into operation unit instructions and inputs them to the operation unit 8.

The operation unit 8 is configured to execute specific operations. It invokes the mapped input neurons from the input neuron buffer 6 and mapped weights from the weight buffer 7 for operations, according to the operation instructions.

The operation unit 8 executes operations including neural network calculations.

In an embodiment, the calculation unit includes, but not limited to: a multiplier as a first part, one or more adders as a second part (more specifically, an adder tree formed by the adders of the second part), an activation function unit as a third part, and/or a vector processing unit as a fourth part. More specifically, the vector processing unit can process vector operations and/or pooling operations. The first part multiplies an input data 1 (in1) with an input data 2 (in2) to obtain the output (out) after multiplication, with the process: out=in1*in2; the second part adds the input data (in1) by the adders to obtain the output data (out). More specifically, when the second part is an adder tree, the input data (in1) is added step by step through the adder tree to obtain the output data (out); wherein in1 is a vector having a length of N, N>1, with the process: out= in1[1]+in1[2]+...+in1[N]; and/or the input data (in1) is accumulated by the adder tree and then added with the input data (in2) to get the output data (out), with the process: out=in1[1]+in1[2]+...+in1[N]+in2; or the input data (in1) is added with the input data (in2) to obtain the output data (out), with the process: out=in1+in2. The third part operates on the input data (in) with the activation function (active) to obtain the activation output data (out), with the process: out=active(in); wherein the activation function (active) can be sigmoid, tanh, relu, softmax and the like. In addition to the activation operation, the third part can implement other nonlinear functions. It is possible to obtain the output data (out) by subjecting the input data (in) to an operation (f), with the process: out=f(in). The vector processing unit obtains a pooled output data (out) by a pooling operation on the input data (in), with the process: out=pool(in), wherein the "pool" refers to a pooling operation. The pooling operation includes, but not limited to: average pooling, maximum pooling and median pooling; and the input data (in) is data in a pooling kernel associated with the output (out).

The operation unit performs the operations, including a first part of multiplying the input data 1 with the input data 2 to obtain the multiplied data; and/or a second part of performing the additions (more specifically, the adder tree operations configured to add the input data 1 step by step through the adder tree), or adding the input data 1 with the input data 2 to obtain output data; and/or a third part of performing an activation function operation by applying an activation function (active) operation on the input data to obtain the output data; and /or a fourth part of performing a pooling operation with out = pool (in), where "pool" refers to a pooling operation. The pooling operation includes, but not limited to: average pooling, maximum pooling and median pooling; and the input data (in) is data in a pooling kernel associated with the output (out). In the operations of the above parts, one or more parts can be selected freely to make combinations in different orders, thereby achieving operations of different functions.

The output neuron buffer 9 is used to store the output neurons obtained by the operation unit, and then store the same in the storage unit 2 via DMA 3. The output neurons stored in the storage unit 2 can be invoked from the outside.

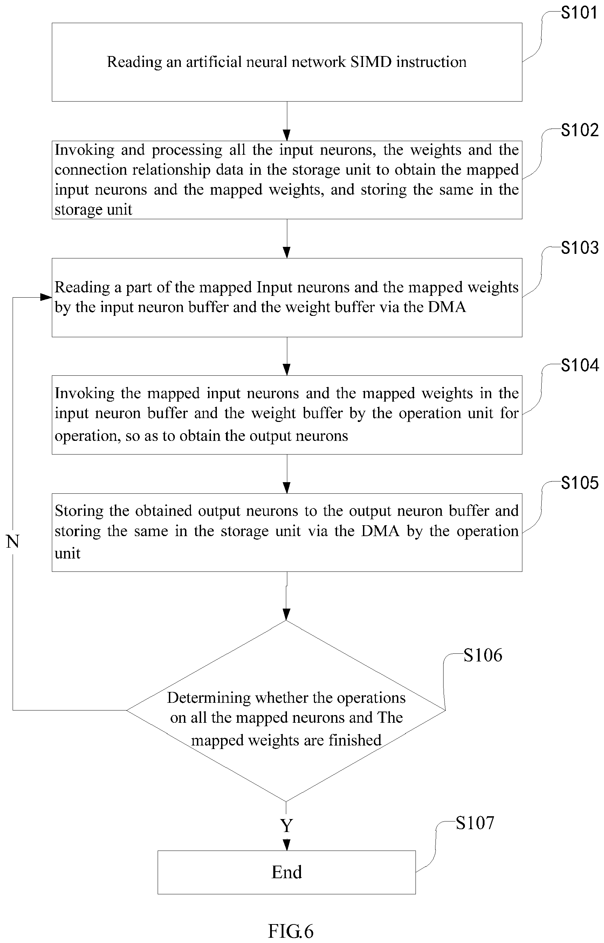

The present embodiment further provides a method for artificial neural network operation, as shown in FIG. 6, comprising the following steps:
S101: reading an artificial neural network SIMD instruction to start the execution on the artificial neural network operation.
S102: the mapping unit invoking and processing all the input neurons and the weights in the storage unit to obtain the mapped input neurons and the mapped weights, and storing the same in the storage unit.

Specifically, the first mapping unit performs a first mapping process on the input neurons and the weights, and the second mapping unit performs a second mapping process on the input neurons and the weights. Both mapping units may use the two connection manners to generate the connection relationship data, and output the mapped input neurons and the mapped weights from the input neurons and weights according to the connection relationship data. The two connection manners and the output of the mapped input neurons and the mapped weights according to the connection relationship data have been described in detail in the above, and will be omitted here.

S103: reading a part of the mapped input neurons and the mapped weights by the input neuron buffer 6 and the weight buffer 7 via the DMA 3.

S104: invoking the mapped input neurons in the neuron buffer 6 and the mapped weights in the weight buffer 7 by the operation unit for operation, so as to obtain output neurons.

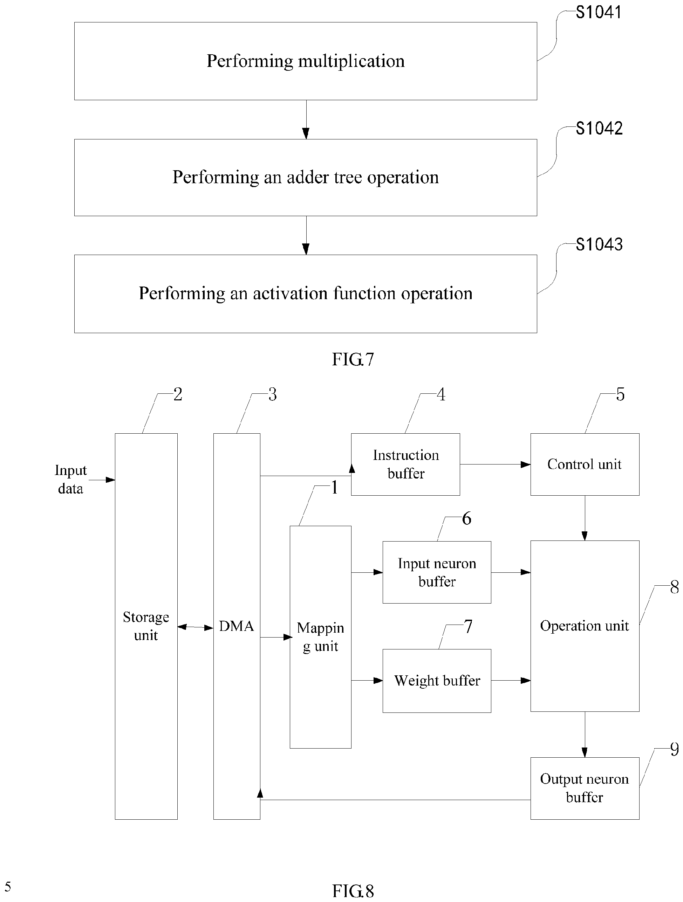

In one embodiment, the specific operation includes the following stages, as shown in FIG. 7:
S1041: performing a multiplication, to multiply the mapped input neuron data with the mapped weight data;
S1042: performing an adder tree operation, to add the results obtained in the first stage step by step by the adder tree to complete the vector inner product operation;
S1043: performing a nonlinear transformation on the results obtained in the second stage to obtain the output neuron, wherein the nonlinear transformation is an activation function operation, and the activation function may be a sigmoid function, a tanh function, a ReLU function, a softmax function, and the like.

In other embodiments, the performing of the adder tree operation is not necessarily based on the results in the first stage; instead, data input into the adder tree operation unit may be operated directly. The nonlinear transformation is not necessarily based on the results in the second stage; instead, data input into the nonlinear transforming unit may be transformed directly.

S105: storing the obtained output neurons to the output neuron buffer 9 and storing the same into the storage unit 2 via DMA 3 by the operation unit.

S106: determining whether all the mapped input neurons and the mapped weights have been calculated, and if the result is N (No), returning to step S103, if the result is Y (Yes), proceeding to the process to step S107.

S107: closing the operation.

Another embodiment of the present disclosure provides a device for artificial neural network operation, including a mapping unit 1, a storage unit 2, a DMA (Direct Memory Access) 3, an instruction buffer 4, a control unit 5, an input neuron buffer 6, a weight buffer 7, an operation unit 8 and an output neuron buffer 9, as shown in FIG 8, wherein:
The storage unit 2 is configured to store data and instructions; it receives and stores data and instructions input from the outside, wherein the data include input neurons and weights.

The DMA 3 invokes the instructions in the storage unit 2 to be allocated to the instruction buffer 4, and invokes the input neurons and the weights in the storage unit 2 to be allocated to the mapping unit 1 for direct mapping.

The mapping unit 1 performs a first mapping operation by the first mapping unit 11 and performs a second mapping by the second mapping unit 12. The mapping unit 1 obtains the mapped input neurons and the mapped weights by mapping the data, and transmits the same to the input neurons buffer 6 and the weight buffer 7 respectively.

The control unit 5 reads dedicated instructions from the instruction buffer 4, decodes the instructions into operation unit instructions and inputs them to the operation unit 8.

The operation unit 8 is configured to execute specific operations. It invokes the mapped input neurons from the input neuron buffer 6 and mapped weights from the weight buffer 7 for operations, according to the operation instructions. The operation unit 8 has been described in detail as above and will not be repeated here.

The output neuron buffer 9 is configured to store the output neurons obtained by the operation unit, and store the same into the storage unit 2 via the DMA 3. The output neurons stored in the storage unit 2 can be invoked from the outside.

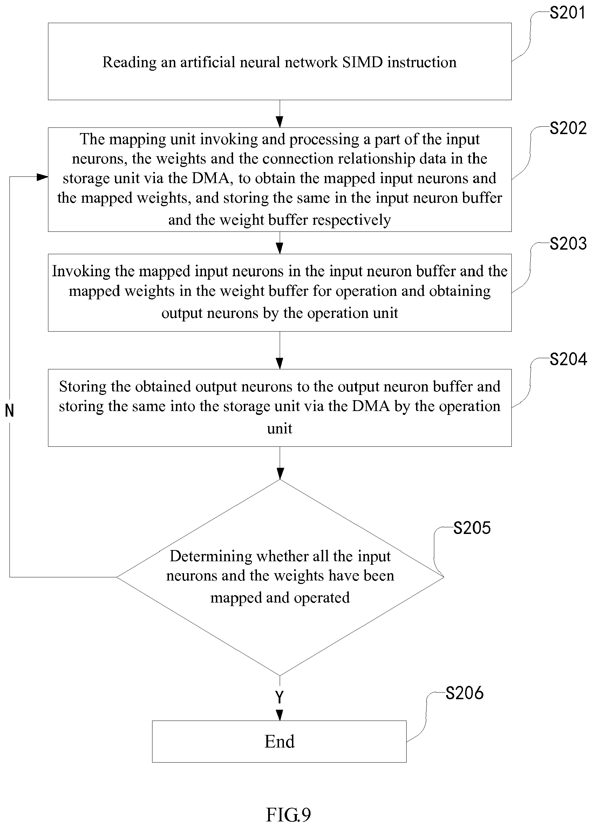

This embodiment further provides a method for artificial neural network operation, as shown in FIG. 9, including the following steps:
S201: reading an artificial neural network SIMD instruction to start the execution on the artificial neural network operation.
S202: the mapping unit invoking and processing a part of the input neurons and the weights in the storage unit via the DMA 3, and storing the obtained mapped input neurons and mapped weights into the input neuron buffer 6 and the weight buffer 7 respectively.

Specifically, the first mapping unit performs a first mapping process on the input neurons and the weights, and the second mapping unit performs a second mapping process on the input neurons and the weights. Both mapping units may use the two connection manners to generate the connection relationship data, and output the mapped input neurons and the mapped weights from the input neurons and weights according to the connection relationship data. The two connection manners and the output of the mapped input neurons and the mapped weights according to the connection relationship data have been described in detail in the above, and will be omitted here.

S203: invoking the mapped input neurons in the neuron buffer 6 and the mapped weights in the weight buffer 7 by the operation unit for operation, so as to obtain output neurons.

The specific operation stages are identical with those in step S104 of the previous embodiment, and will not be repeated here.

S204: storing the obtained output neurons to the output neuron buffer 9 and storing the same into the storage unit 2 via DMA 3 by the operation unit.

S205: determining whether all the input neurons and the weights have been mapped and calculated, and if the result is N (No), returning to step S202, if the result is Y (Yes), proceeding to the process to step S206.

S206: closing the operation.

Compared with the previous embodiment, the first mapping unit and the second mapping unit of the mapping unit in the present embodiment perform the mapping during the calculation, and the mapped data is operated by the operation unit directly. In contrary, in the previous embodiment, the mapped data is stored in the storage unit by the first mapping unit and the second mapping unit of the mapping unit in advance before the operations by the operation unit. In the present embodiment, the operation speed is faster.

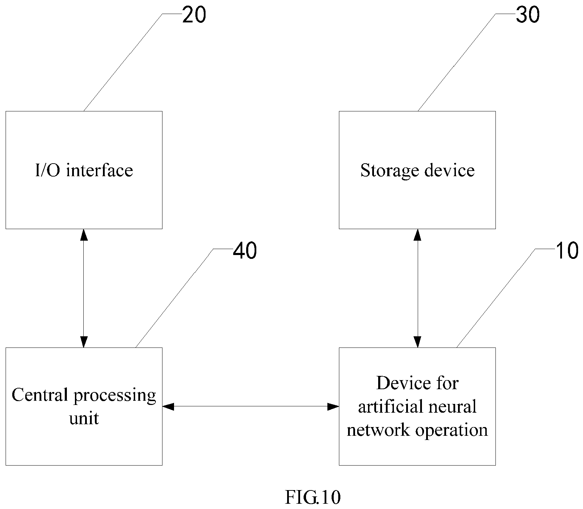

Another embodiment of the present disclosure provides a system for artificial neural network operation, as shown in FIG. 10, which includes an I/O interface 20, a storage device 30, a central processing unit (CPU) 40 and a device 10 for artificial neural network operation.

The I/O interface 20 is used for transmitting the I/O data to the device 10 for artificial neural network operation by the CPU 40; and then the I/O data is written into the storage device 30 by the device 10 for artificial neural network operation. The dedicated instructions required by the device 10 for artificial neural network operation are also transmitted to the device 10 for artificial neural network operation by the CPU 40.

The storage device 30 is configured to temporarily store artificial neural network models and neuron data, particularly when not all the models can be stored in the buffer of the device 10 for artificial neural network operation.

The central processing unit (CPU) 40 is used for basic control such as data transfer and start/stop of the device 10 for artificial neural network operation, and serves as the interface between the device 10 for artificial neural network operation and the external control.

The device 10 for artificial neural network operation is configured to receive data and programs from the CPU 40, execute an artificial neural network operation algorithm, and the execution result by the device 10 for artificial neural network operation is transmitted back to the CPU 40.

In the present embodiment, the device 10 for artificial neural network operation is used as a coprocessor of the CPU 40 or the GPU to execute the artificial neural network operation algorithm.

In still another embodiment of the present disclosure, multiple devices for artificial neural network operation are interconnected to form a system: the multiple devices for artificial neural network operation can be interconnected through a PCIE bus to support larger-scale artificial neural network operations; they can share a common host CPU or each can have their own host CPUs; and they can share a memory or a respective memory may be provided for each accelerator. In addition, the interconnection method can be of any interconnection topology.

A system of the artificial neural network operation can be used as a system on a chip SOC for a smart device such as a mobile phone, a robot, a drone, etc., which effectively reduces the core area of the control portion, increases the processing speed, and reduces the overall power consumption.. In this case, the universal interconnect interface of the combined processing device is coupled to certain components of the device, where the certain components are, for example, a camera, a monitor, a mouse, a keyboard, a network card and a WIFI interface.

In an embodiment, the present disclosure discloses a chip that includes a device for artificial neural network operation or a system for artificial neural network operation.

In an embodiment, the present disclosure discloses a chip package structure that includes the chip described above.

In an embodiment, the present disclosure discloses a board that includes the chip package structure described above.

In an embodiment, the present disclosure discloses an electronic device that includes the board described above.

The electronic device may include a data processing device, a robot, a computer, a printer, a scanner, a tablet, a smart terminal, a mobile phone, a driving recorder, a navigator, a sensor, a camera, a cloud server, a camera, a video camera, a projector, a watch, an earphone, a mobile storage, a wearable device, a transportation, a household appliance and/or a medical facility.

The transportation includes an airplane, a ship and/or a vehicle. The household appliance includes a television set, an air conditioner, a microwave oven, a refrigerator, a rice cooker, a humidifier, a washing machine, an electric lamp, a gas stove, and a range hood. The medical device includes a nuclear magnetic resonance instrument, a B-ultrasound machine, and/or an electrocardiograph.

The manner for checking whether or not the technical solution described in the present disclosure should be used is given as follows:
If a device or a method of the technique of the present disclosure is employed, when performing neural network operations, for a given neural network, if the absolute value of some of the input neurons and the weights in the network is equal to or close to zero, an improvement over the device or the method that does not employ the technique described herein can be achieved, in terms of the operation speed. Moreover, a larger ratio of the input neurons with absolute values equal to or close to 0 to all the input neurons in the network results in a greater increase of the operation speed; and a larger ratio of the weights with absolute values equal to or close to 0 to all the weights in the network, the greater the increase of the operation speed.

The processes or methods depicted in the figures may be executed by processing logics of hardware (e.g. a circuitry, dedicated logics), firmware, a software (e.g. software carried on a non-transitory computer readable medium), or a combination thereof. Although the processes or methods have been described in an order in the above text, it should be understood that, certain described operations can be performed in different orders. Moreover, some operations may be performed in parallel rather than sequentially.

It should be noted that the implementations that are not shown or described in the drawings or the description are all known to those skilled in the art, and are not described in detail. In addition, the above definitions of the various elements and methods are not limited to the specific structures, shapes or manners mentioned in the embodiments, and modifications and alternation can be readily conceived by those skilled in the art.

The foregoing embodiments further explain the objective, the technical solution, and the advantageous effects of the present disclosure. It is appreciated that the foregoing is merely specific embodiments of the present disclosure, and is not intended to be limiting. Any modification, equivalent substitution, improvements, etc. made within the spirit and principles of the present disclosure shall be included in the scope of the present disclosure.

## Claims

1. A device for an artificial neural network operation, comprising:
a mapping unit (1) configured to receive input neurons and weights, generate connection relationship data between the input neurons and output neurons, and output mapped input neurons and mapped weights, with correspondences of the mapped input neurons and the mapped weights being an input neuron-weight pairs,
wherein the mapping unit (1) comprises:
a first mapping unit (11) configured to remove weights with absolute values less than or equal to a first threshold or with values of 0 or less than the first threshold; and/or
a second mapping unit (12) configured to remove input neurons with absolute values less than or equal to a second threshold or with values of 0 or less than the second threshold.

2. The device according to claim 1, wherein the first mapping unit (11) comprises:
a first mapping determination unit (111) configured to determine if the absolute value of each input weight is less than or equal to the first threshold or if the value of each input weight is 0 or less than the first threshold, and
a first mapping execution unit (112) configured to generate the connection relationship data based on determination results by the first mapping determination unit (111), remove the weights with absolute values less than or equal to the first threshold or with values of 0 or less than the first threshold, and output the input neuron-weight pairs, and/or
the second mapping unit (12) comprises:
a second mapping determination unit (121) configured to determine if the absolute value of each input neuron is less than or equal to the second threshold or if the value of each input neurons of each input is 0 or less than the second threshold; and
a second mapping execution unit (122) configured to generate the connection relationship data based on determination results by the second mapping determination unit (121), remove the input neurons with absolute value less than or equal to the second threshold or with values of 0 or less than the second threshold, and output the input neuron-weight pairs.

3. The device according to claim 2, wherein an input layer of the neural network has N input neurons *I₁, I*₂*,* ..., *I_{N},* an output layer has M output neurons *O₁, O₂*, ..., *O_{M},* and
generating the connection relationship data by the first mapping execution unit (112) of the first mapping unit (11) comprises:
obtaining corresponding connection relationship data for the *j*th output neuron *Oⱼ*, wherein for N nodes in the input layer, the connection relationship data has N bits, all the values of the N bits are set to 1 at the beginning, with all the N input neurons *I₁, I₂*, ..., *I_{N}* having connections with the output neuron *Oⱼ*; if the absolute value of the weight between the *i*th input neuron *Iᵢ* and the output neuron *Oⱼ* is less than or equal to the first threshold, or if the value of the weight between the *i*th input neuron *Iᵢ* and the output neuron *Oⱼ* is 0 or less than the first threshold, the value of the *i*th bit in the connection relationship data is set to 0, i.e., there is no connection between *Iᵢ* and *Oⱼ*; the connection relationship data for all the output neurons *O₁, O₂*, ..., *O_{M}* are merged into one vector, with the (N×(*j*-1)+1)th to the (*N×J*)th components of the vector being the connection relationship data corresponding to the output neurons *Oⱼ*.

4. The device according to claim 2, wherein the input layer of the neural network has N input neurons *I₁, I₂*, ..., *I_{N},* the output layer has M output neurons *O₁, O₂*, ..., *O_{M},* and
generating the connection relationship data by the first mapping execution unit (112) of the first mapping unit (11) comprises:
obtaining corresponding connection relationship data for the *j*th output neuron *Oⱼ*; if the absolute value of the weight between the *i*th input neuron *Iᵢ* and the output neuron *Oⱼ* is less than or equal to the first threshold, or if the value of the weight between the *i*th input neuron *Iᵢ* and the output neuron *Oⱼ* is 0 or less than the first threshold, there is no connection between *Iᵢ* and *Oⱼ*; or otherwise there is a connection; n input neurons having connections with *Oⱼ* are *I_{i_1}, I_{i_2}*, ..., *Ii_{_n},* wherein 1 ≤ i_1 < i_2 < ... < i n ≤ *N;* the connection relationship data corresponding to the output neuron *Oⱼ* has n bits, wherein the value of the first bit of the connection relationship data is equal to *i*_1-1, and the value of the *k*th bit of the connection relationship data is equal to *i_k-i_(k-1),* where *n*≥*k*>1.

5. The device according to claim 2, wherein the input layer of the neural network has N input neurons *I₁, I₂*, ..., *I_{N},* the output layer has M output neurons *O₁, O₂*, ..., *O_{M},* and
generating the connection relationship data by the second mapping execution unit (122) of the second mapping unit (12) comprises:
obtaining corresponding connection relationship data for the *j*th output neuron *Oⱼ*, wherein for the N nodes in the input layer, the connection relationship data has N bits, all the values of the N bits are set to 1 at the beginning, with all the N input neurons *I₁, I₂*, ..., *I_{N}* having connections with the output neuron *Oⱼ*; if the absolute value of the *i*th input neuron *Iᵢ* is less than or equal to the second threshold, or if the value of the *i*th input neuron *Iᵢ* is 0 or less than the second threshold, the value of the *i*th bit in the connection relationship data is set to 0, i.e., there is no connection between *Iᵢ* and *Oⱼ*; the connection relationship data for all the output neurons *O₁, O₂*, ..., *O_{M}* are combined into one vector, with the (N×(j*-*1)+1)th to the (*N×J)*th components of the vector being the connection relationship data corresponding to the output neurons *Oⱼ*.

6. The device according to claim 2, wherein the input layer of the neural network has N input neurons *I₁, I₂*, ..., *I_{N},* the output layer has M output neurons *O₁, O₂*, ..., *O_{M},* and
generating the connection relationship data by the second mapping execution unit (122) of the second mapping unit (12) comprises:
obtaining corresponding connection relationship data for the *j*th output neuron *Oⱼ*; if the absolute value of the *i*th input neuron *Iᵢ* is less than or equal to the second threshold, or if the value of the *i*th input neuron *Iᵢ* is 0 or less than the second threshold, there is no connection between *Iᵢ* and *Oⱼ*; or otherwise there is a connection; n input neurons having connections with *Oⱼ* are *I_{i_1}, I_{i_2},* ..., *Ii_{_n},* wherein 1 ≤ i_1 < i_2 < ... <i_n ≤ *N;* the connection relationship data corresponding to the output neuron *Oⱼ* has n bits, wherein the value of the first bit of the connection relationship data is equal to *i*_1-1, and the value of the *k*th bit of the connection relationship data is equal to *i_k-i_*(*k*-1), where *n*≥*k*>1.

7. The device according to any one of claims 1 to 6, further comprising:
a storage unit (2), configured to store data and instructions input from the outside, wherein the data includes input neurons and weights, which are invoked by the mapping unit (1), and the mapped input neurons and the mapped weights are then output by the mapping unit (1); and
an operation unit (8), configured to invoke the mapped input neurons and the mapped weights and perform operations to obtain the output neurons.

8. The device according to claim 7, wherein the operation device (8) comprises:
a multiplication unit,
at least one adder, and/or
a non-linear transforming unit.

9. The device according to claim 7, further comprising:
an instruction buffer unit (4), configured to buffer instructions;
an input neuron buffer (6), configured to buffer the mapped input neurons;
a weight buffer (7), configured to buffer the mapped weights;
a control unit (5), configured to read instructions in the instruction buffer unit (4) and control the operation unit (8) to invoke the mapped input neurons in the input neuron buffer (6) and the mapped weights in the weight buffer (7) and perform operations; and
an output neuron buffer (9), configured to buffer the output neurons obtained by the operation unit (8).

10. The device according to claim 9, wherein mapped input neurons and the mapped weights output by the mapping unit (1) are stored on the storage unit (2), and the device further comprises:
a DMA (3), configured to invoke instructions, the mapped input neurons and the mapped weights on the storage unit (2) to store them in the instruction buffer unit (4), the input neuron buffer (6), and the weight buffer (7) respectively, and store the output neurons in the output neuron buffer (9) on the storage unit (2), so as to be transmitted to the outside.

11. The device according to claim 9, further comprising:
a DMA (3), configured to invoke instructions on the storage unit (2) to store the instruction on the instruction buffer unit, invoke data on the storage unit (2) to store the data on the mapping unit (1), store the mapped input neurons and the mapped weights output by the mapping unit (1) respectively into the input neuron buffer (6) and the weight buffer (7), and store the output neurons in the output neuron buffer (9) on the storage unit (2), so as to be transmitted to the outside.

12. A method for artificial neural network operation by using the device according to any one of claims 7 to 11, the method comprising:
invoking the input neurons and the weights in the storage unit (2) and outputting the mapped input neurons and the mapped weights by the mapping unit (1); and
invoking the mapped input neurons and the mapped weights and performing an operation by the operation device (8), to obtain the output neurons.

13. The method according to claim 12, wherein the operations comprise:
a multiplication operation,
an addition, and/or
a nonlinear transformation.

14. The method according to claim 12, further comprising:
invoking, by the mapping unit (1), all the input neurons and the weights in the storage unit (2), outputting the mapped input neurons and the mapped weights, and storing the mapped input neurons and weights into the storage unit (2);
reading a part of the mapped input neurons and the mapped weights by the input neuron buffer (6) and the weight buffer (7) via the DMA (3), to have the read mapped input neurons and weights invoked by the operation unit (8);
buffering, by the output neuron buffer (9), the output neurons obtained from the operation unit (8) and storing the obtained output neurons into the storage unit (2) via the DMA (3); and
determining whether all the input neurons and the weights have been operated, if so, finishing the operation; or otherwise, returning to the step of reading a part of the mapped input neurons and the mapped weights by the input neuron buffer (6) and the weight buffer (7) via the DMA (3).

15. The method according to claim 12, further comprising:
invoking, by the mapping unit (1), a part of the input neurons and the weights in the storage unit (2) via the DMA (3) and outputting the mapped input neurons and the mapped weights;
buffering the mapped input neurons and the mapped weights by the input neuron buffer (6) and the weight buffer (7), to have the mapped input neurons and the mapped weights invoked by the operation unit (8);
buffering, by the output neuron buffer (9), the output neurons obtained from the operation unit (8) and storing the output neurons into the storage unit (2) via the DMA (3); and
determining whether all the input neurons and the weights have been mapped and operated, if so, finishing the operation; or otherwise, returning to the step of invoking a part of the input neurons and the weights in the storage unit (2) via the DMA (3) by the mapping unit (1).

16. A chip comprising the device for artificial neural network operation according to any one of claims 1 to 11.

17. An electronic device comprising the chip according to claim 16.
